(19)

Europäisches
Patentamt

European
Patent Office

Office européen
des brevets

(11) **EP 1 360 530 B1**

(12) **EUROPEAN PATENT SPECIFICATION**

(45) Date of publication and mention
of the grant of the patent:
**21.10.2009 Bulletin 2009/43**

(21) Application number: **02706255.3**

(22) Date of filing: **14.02.2002**

(51) Int Cl.:
***G02B 6/27*** (2006.01)

(86) International application number:
**PCT/US2002/004215**

(87) International publication number:
**WO 2002/065174 (22.08.2002 Gazette 2002/34)**

(54) **OPTICAL POLARIZATION BEAM SPLITTER/COMBINER WITH ISOLATION IN THE BACKWARD OPTICAL PATH**

OPTISCHER POLARISATIONSSTRAHLVERZWEIGER/-KOMBINIERER MIT ISOLATION IM OPTISCHEN RÜCKWÄRTSWEG

DIVISEUR/COMBINATEUR DE FAISCEAU A POLARISATION OPTIQUE ET ISOLEMENT DU CHEMIN OPTIQUE INVERSE

(84) Designated Contracting States:
**AT BE CH CY DE DK ES FI FR GB GR IE IT LI LU MC NL PT SE TR**

(30) Priority: **14.02.2001 US 269224 P**

(43) Date of publication of application:
**12.11.2003 Bulletin 2003/46**

(73) Proprietor: **Finisar Corporation
Sunnyvale, CA 94089-1133 (US)**

(72) Inventors:
• **HUANG, Yonglin
Milpitas, CA 95035 (US)**
• **DENG, Qi
Cupertino, CA 95014 (US)**

• **DU, Liren
Mountain View, CA 94041 (US)**

(74) Representative: **Finnie, Peter John et al
Gill Jennings & Every LLP
Broadgate House
7 Eldon Street
London EC2M 7LH (GB)**

(56) References cited:
| | |
|---|---|
| **WO-A-01/09655** | **US-A- 5 642 448** |
| **US-A- 5 657 155** | **US-A- 5 657 155** |
| **US-A- 5 740 288** | **US-A- 5 740 288** |
| **US-A- 6 014 254** | **US-A- 6 014 254** |
| **US-A- 6 014 256** | **US-A- 6 081 367** |
| **US-A- 6 081 367** | **US-B1- 6 198 858** |
| **US-B1- 6 373 631** | |

**Description**

**BACKGROUND OF THE INVENTION**

1. FIELD OF THE INVENTION

The present invention relates to an optical beam splitting/combining device that includes isolation in a reverse direction. The optical beam splitting/combining device may be used over a broad wavelength in an optical network or multiplexing system.

2. DESCRIPTION OF THE RELATED ART

The telecommunications network serving the United States and the rest of the world is presently evolving from analog to digital transmission with ever increasing bandwidth requirements. Optical fiber has proved to be a valuable tool, replacing copper cable in nearly every application from large cable trunks to subscriber distribution plants. Optical fiber is capable of carrying much more information than copper with lower attenuation.

Currently expansion of bandwidth in fiber optic networks is being accomplished by what is known as "wavelength division multiplexing" (WDM), in which modulation techniques are used to handle separate subscriber/data sessions concurrently on a single optical fiber. Current International Telecommunications Union (ITU) specifications call for channel separations of approximately 50 GHz. The ITU grid typically refers to those frequencies centered about approximately 1550 nm (e.g., approximately 1525 nm to 1575 nm for the C band). At those wavelengths, 50 GHz channel spacing corresponds to a wavelength separation of approximately 0.4 nm. In WDM applications, each subscriber datastream is optically modulated onto the output beam of a corresponding laser. The modulated information from each of the semiconductor lasers is then combined onto a single optical fiber for transmission.

WDM networks are evolving towards re-configurable architectures in which each transmitter's (or laser's) wavelength must be re-selectable on command. Re-configurable networks offer significant capacity, reliability, and management advantages over static systems (See, e.g., R. Ramaswami and K. Sivarajan, Optical Networks, A Practical Perspective, Morgan Kaufmann Publishers, 1998).

Across an optical network, a broad range of optical devices (e.g., transmitters, receivers, multiplexers, demultiplexers, amplifiers, splitters, combiners, isolators, etc.) must be fabricated to handle each of these channels or wavelengths. Typically, each device is fabricated for a specific or marrow channel.

Thus having devices in an optical network that are operable over a wide range of wavelengths increasas the ability of the devices to operate for a wide range of lasers. This reduces inventory costs because the number of separate wavelength devices needed for the optical network decreases as each device's wavelength range increases.

Also, combining the functions of two or more devices into a single device can save space within the optical network and reduce transmission losses within the optical network. Reducing transmission losses in the optical network can reduce the number of lasers needed and/or reduce the power consumption of the lasers. Providing optical devices that combine the features of two or more discrete wavelength optical devices and that operate over a wide range of wavelengths results in significant cost reductions compared to using discrete, narrow wavelength optical devices.

US-A-5 657 155 discloses an optical tap coupler device.

US-A-5 642 448 discloses an integrable fibre-optic coupler and associated devices and systems.

**SUMMARY OF THE INVENTION**

A single optical device, as defined in claim 1, may be used to split a beam of light into two or more components of light or else combine two or more components of light into a combined beam of light as well as providing isolation in a reverse direction (i.e., inhibit optical feedback). The optical device includes a first fiber coupling coupled to a fiber. The fiber is used to propagate the beam of light or the combined beam of light. The beam of light may be collimated or focused by a lens placed in the first fiber coupling. In another embodiment, the beam of light is collimated or focused by a lens shaped fiber tip placed in the first fiber coupling. The beam of light may be split into two or more components of light by a beam splitter/combiner placed in the path of the beam of light in the optical device.

In another arrangement, two or more components of light are combined into a combined beam of light by the beam splitter/combiner of the optical device. The optical device includes a second fiber coupling coupled to two or more additional fibers or lens shaped fiber tips. The two or more components of light may be collimated or focused by one or more lenses placed in the second fiber coupling. The two or more additional fibers are used to propagate the two or more components of light. The optical device includes an isolator placed in the path of the beam of light. The isolator is used to inhibit optical feedback in a reverse direction within the optical device.

In certain embodiments, the isolator includes a Faraday rotator, an input wedge, and an output wedge. The isolator may be positioned to inhibit optical feedback in a desired direction. For example, the isolator may be positioned to inhibit optical feedback towards the first fiber coupling when the optical device is used to split a beam of light. Alternately, the isolator may be positioned to inhibit optical feedback towards the second fiber coupling when the optical device is used to combine two or more components of light,

In an embodiment, the beam splitter/combiner includes a prism. The prism may split a beam of light into two polarized components of light at a diverging angle. In another embodiment, the prism may combine polarized components of light into a combined beam of light. The diverging angle of the prism may substantially match the diverging angle of the components of light coming from or entering the one or more lenses in the second fiber coupling. Matching the diverging angles may reduce transmission losses within the optical device.

The optical device may be used as a passive device included in, for example, an optical network. The optical device may be used as a splitter or combiner in an optical network In some embodiments, the optical devices may be used to split multiple sets of beams of light and/or combine multiple sets of components of light. The multiple sets of beams of light and multiple sets of components of light may be multiplexed within the optical device such that the sets do not intersect or interfere with each other.

An advantage of the described optical device may be an optical path free of contaminants (e.g., epoxy). Another advantage of the optical device may include the ability to operate at relatively high power densities, a relatively wide wavelength operating range, and a reduction in transmission losses compared to systems that include discrete splitting/ combining devices and isolators. Furthermore, combining a splitting/combining function with an isolation function in a single device may reduce manufacturing, installation and/or operating costs associated with optical networks.

## BRIEF DESCRIPTION OF THE DRAWINGS

Further advantages of the present invention may become apparent to those skilled in the art with the benefit of the following detailed description of the preferred embodiments and upon reference to the accompanying drawings in which:

FIG. 1 depicts a schematic of an embodiment of an optical beam splitting/combining device;
FIG. 2 depicts a schematic of an isolator;
FIG. 3 depicts a schematic of a Wallaston prism;
FIG. 4 depicts a cross-sectional view of a ferrule containing two fibers; and
FIG. 5 depicts a schematic of an embodiment of an optical beam splitting/combining device placed in a housing.

While the invention is susceptible to various modifications and alternative forms, specific embodiments thereof are shown by way of example in the drawings and may herein be described in detail. The drawings may not be to scale.

## DETAILED DESCRIPTION OF THE INVENTION

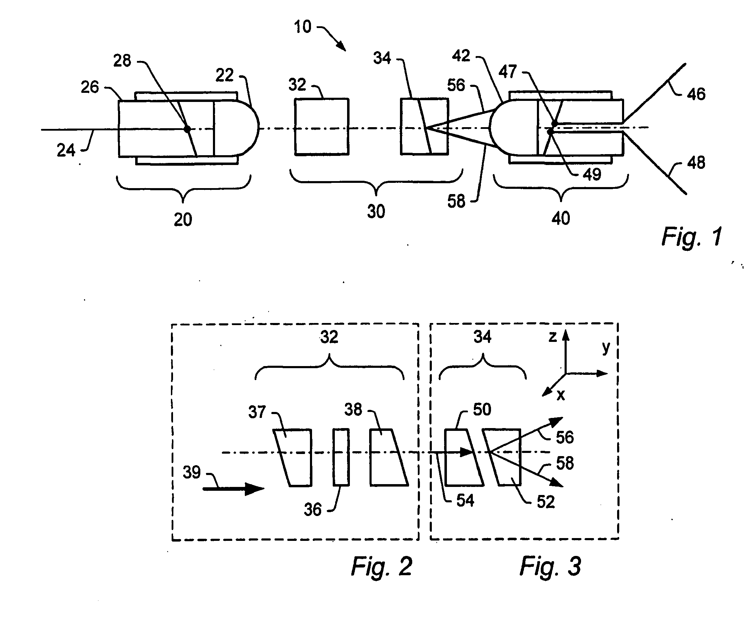

Turning to the drawings, FIG. 1 depicts a schematic of an embodiment of optical beam splitting/combining device 10. Optical beam splitting/combining device 10 may include first fiber coupling 20, core section 30, and second fiber coupling 40. In one arrangement (beam splitting mode), a beam of light enters first fiber coupling 20; the beam of light splits into two or more components of light in core section 30; and the two or more components of light exit through second fiber coupling 40. In another arrangement (beam combining mode), two or more components of light enter second fiber coupling 40; the two or more components of light combine into a beam of light in core section 30; and the beam of light exits through first fiber coupling 20.

First fiber coupling 20 may couple to fiber 24. First fiber coupling 20 may be a single fiber coupling. In some embodiments, first fiber coupling 20 may be coupled to more than one fiber. Fiber 24 may be a single mode fiber, a multimode fiber, or a polarization maintaining (PM) fiber. A single mode fiber may include a single optical transverse mode over a core cross section of the fiber. A multimode fiber may include more than one transverse mode over a core cross section of the fiber. In one embodiment, a single mode fiber may be used in a long distance optical communication application. A beam of light may propagate along the length of fiber 24. Fiber 24 may also include pigtail 26. Pigtail 26 may improve the strength and flexibility of fiber 24. End 28 of fiber 24 may be placed within first fiber coupling 20. A beam of light may exit or enter fiber 24 through end 28. End 28 may include an optically polished surface. The optically polished surface may be angled to an optical axis of the fiber. In some embodiments, an anti-reflection (AR) coating is applied to end 28 of fiber 24.

First fiber coupling 20 may include lens 22. Lens 22 may be a conventional spherical lens, a graded-index (GRIN) lens, or an aspherical lens. Lens 22 may collimate or focus a beam of light entering the lens. In one embodiment, lens 22 collimates a beam of light coming from fiber 24. In another embodiment, lens 22 focuses a beam of light into fiber 24. Lens 22 may be placed in an optimal position in relation to fiber 24 and isolator 32. The optimal position may be, for example, a potion such that the focal point of lens 22 coincides with a position of end 28 of fiber 24. Positioning lens 22 optimally may minimize transmission loss between fiber 24, lens 22, and isolator 32.

In some embodiments with more than one fiber coupled to first fiber coupling 20, more than one lens may be used in the first fiber coupling. For example, one lens may be used to focus or collimate a beam of light associated with each fiber coupled to first fiber coupling 20. In other embodiments with more than one fiber coupled to first fiber coupling 20, one lens may be used to focus or collimate the beams of light associated with the more than one fiber.

Core section 30 includes isolator 32 and beam splitter/combiner 34. FIG. 2 depicts a schematic of isolator 32, which is a Faraday isolator. A Faraday isolator 32 may include Faraday rotator 36, input wedge 37, and output wedge 38. Faraday rotator 36, input wedge 37, and output wedge 38 may be optically coupled. In an embodiment, a beam of light may travel through isolator 32 in a path indicated by arrow 39. Input wedge 37 may polarize the beam of light in a vertical plane (i.e., about 90° from the path of arrow 39). Faraday rotator 36 may rotate the polarized light in the vertical plane about 45°. A polarization plane of output wedge 38 may be aligned about 45° relative to the polarization plane of input wedge 37. Thus, the polarized light rotated about 45° by Faraday rotator 36 may pass through output wedge 38 relatively uninhibited.

Any light propagating in a reverse direction (a direction opposite of arrow 39) may first pass through output wedge 38. Output wedge 38 may polarize light passing in the reverse direction in the approximately 45° plane. The reverse direction light may be further rotated, in a non-reciprocal manner, approximately another 45° by Faraday rotator 36. The reverse direction light may now be polarized in a horizontal plane (i.e., 90° polarization from the vertical plane of input wedge 37). Light polarized in the horizontal plane may be rejected by input wedge 37, which has a vertical polarization plane. Thus, light from the reverse direction may not pass through isolator 32 (i.e., isolator 32 inhibits optical feedback through the isolator). In certain embodiment, isolator 32 may provide up to about 30 dB isolation of light traveling in the reverse direction. In other embodiments, isolator may provide up to 40 dB isolation or 50 dB isolation.

In one mode, isolator 32 may be arranged such that a beam of light propagates through the isolator (represented by arrow 39) from first fiber coupling 20 towards beam splitter/combiner 34 (beam splitting embodiment). In another mode, isolator 32 may be arranged such that a beam of light propagates through the isolator (represented by arrow 39) from beam splitter/combiner 34 towards first fiber coupling 20 (beam combining embodiment). The isolator 32 is operable so that the isolator can be arranged in either direction (i.e., inhibit optical feedback towards either first fiber coupling 20 or beam splitter/combiner 34), as selected For example, isolator 32 may be placed on a rotating base that rotates the isolator about a central axis approximately 180° so that the isolator can operate in either direction. The rotating base may be controlled by a user of the device (e.g., a turn knob outside the device coupled to the rotating base) or; in some embodiments, the rotating base may be automatically controlled and operated by a switch. In another embodiment, a direction of a magnetic field applied to Faraday rotator 36 may be switched to switch the isolation direction of the Faraday rotator and, thus, the isolation direction of isolator 32. The direction of the magnetic field may be switched mechanically and/or electrically. For example, a switch may be operated by a user to control the direction of the magnetic field. In some embodiments, the switch may be automatically controlled.

In another embodiment, isolator 32 includes a Faraday rotator, a polarizer, and a polarization analyzer. Isolator 32 may be a polarization dependent isolator. In some embodiments, the isolator may be positioned between the second fiber coupling and the beam splitter/combiner. Isolator 32 may separately isolate each component of light propagating through the isolator. The isolation direction of isolator 32 may be selected by selecting the magnetic field direction applied to the Faraday rotator.

In some embodiments, isolator 32 may provide isolation for more than one beam of light propagating through the isolator. In such embodiments, the more than one beam of light may have points of incidence on isolator 32 that are substantially offset so that the beams of light do not intersect or interfere with each other.

In one embodiment, beam splitter/combiner 34 is used to split a beam of light coming from first fiber coupling 20 into two components of light (a first component and a second component). The two components of light may be polarized in substantially different directions or planes. For example, the first component of light may be polarized approximately perpendicular relative to the polarization plane of the second component of light In other embodiments, the first component may be polarized at a non-perpendicular angle relative to the polarisation plane of the second component of light (e.g., approximately 45°,60°, or 75°). Beam splitter/combina 34 may include a prism or any similar device that splits a single beam into two or more component beams. Beam splitter/combiner 34 may also include a prism or similar device that splits and polarizes a single beam into two or more component beams. Beam splitter/combiner 34 may include birefringent materials. Examples of birefringent materials may include calcium carbonate (calcite), yttrium orthovanadate ($YVO_4$), titanium oxide (rutile), lithium niobate ($LiNbO_3$), and other crystalline materials. In certain embodiments, $LiNbO_3$, rutile, and $YVO_4$ may be desirable because of their high optical birefringence, low optical absorption loss, and their relatively good mechanical properties. Examples of prisms that may be used as beam splicer/combiner 34 include, but are not limited to, a thin film coated right angle prism (RAP), Wallaston prism, Nicol prism, and Rochon prism.

FIG. 3 depicts a schematic of a Wallaston prism that may be used as beam splitter/combiner 34. Beam splitter/combiner 34 may include wedge 50 and wedge 52. Wedge 50 and wedge 52 may be optically coupled. Wedge 50 and wedge 52 may have optical axes orthogonally crossed as compared to a direction of light propagation represented by arrow 54. Further, the optical axis (plane of polarization) of wedge 50 may be approximately 90° rotated from the optical axis of wedge 52. For example, as shown in FIG. 3. if a beam of light propagates in the y-direction, wedge 50 may have an optical axis in the x-direction while wedge 52 has an optical axis in the z-dkmtion, or vice versa. Beam splitter/combiner 34 may split beam of light 54 into components of light 56, 58. In some embodiments, beam splitter/combiner 34 may split beam of light 54 into more than two components of light. In other embodiments with more than one beam of light 54 incident on beam splitter/combiner 34, multiple components of light in different planes may be split by the beam splitter/combiner. In such embodiments, each incident beam of light is split into two or more components that will have properties similar to components of light 56, 58 as described herein. Components of light 56, 58 tend to be polarized in approximately 90° planes according to the optical axes of wedges 50, 52. For example, the first component of light 56 may be polarized in the x-direction while the second component of light 58 is polarized in the z-direcdon.

Wedge 50 and wedge 52 may each have a cutting angle, $\theta$, as shown in FIG. 3. The cutting angle may be used to determine the diverging angle, $\gamma$, of components 56, 58 based on the ordinary index of refraction (no) and the extraordinary index of refraction (ns) of the birefringent material used in wedges 50, 52. The following equation may be used to determine the diverging angle, $\gamma$, for a Wallaston prism:

$$\text{EQN. (1)} \qquad \gamma = 2 \cdot arcSin\left[\left(n_o - n_e\right) \cdot \tan\theta\right].$$

As an example, If calcite (no = 1.66; n$\epsilon$ = 1.49) is used as the material for wedges 50, 52 which have a cutting angle, $\theta$, of 25°, then the diverging angle, $\gamma$, according to EQN. 1, may be about 9.1°. If LiNbO3 (no = 2.286; n$\epsilon$ = 2.2) is used in the wedges, the diverging angle, $\gamma$, may be about 4.6°. In a Wallaston prism, the diverging angle of components of light 56, 58 may be relatively balanced about the axis of input beam of light 54 (i.e., each component of light 56, 58 may have an angle diverging from the axis of the input beam which is approximately $\gamma/2$).

Alternate embodiments of beam splitters/combiners may also be used, which will have a different equation relating the diverging angle to the cutting angle. For example, using a Rochon prism as the beam splitter/combiner will generate a straight through beam, which is aligned on the input axis, and a diverging beam, which diverges from the input axis.

In some embodiments, beam splitter/combiner 34 may split more than one beam of light propagating through the beam splitter/combiner. In such embodiments, the more man one beam of light may have points of incidence on beam splitter/combiner 34 that are substantially offset so that the beams of light do not intersect or interfere with each other. In other embodiments, beam splitter/combiner 34 may combine multiple sets of component beams into multiple beams of light. As with the beam splitting embodiments, the multiple sets of component beams may have points (or planes) of incidence that are substantially offset so that the multiple sets of beams and the multiple combined beams do not intersect or interfere with each other.

As shown in FIG. 1, components of light 56, 58 may propagate from beam splitter/combiner 34 and enter second fiber coupling 40. In some embodiments, isolator 32 may be placed between beam splitter/combiner 34 and second fiber coupling 40. Second fiber coupling 40 may be a dual fiber coupling. Second fiber coupling 40 may be coupled to fibers 46, 48. Second fiber coupling may include at least one lens 42, which is used to focus each component of light 56, 58 into fibers 46, 48. In some embodiments, more than one set of fibers 46, 48 may be coupled to second fiber coupling 40. In such embodiments, each set of fibers 46, 48 may be coupled to second fiber coupling 40 and the components of light of each set of fibers may have properties as described herein for components of light 56, 58. At least one lens 42 may facus or collimate components of light 56, 38 entering or coming from fibers 46. 48. In some embodiments, at least one lens 42 may be a single lens that focuses each component of light 56, 58 into each respective fiber 46, 48. For example, lens 42 may focus component of light 56 into fiber 46 and component of light 58 into fiber 48, or vice versa. In other embodiments, a single lens may be used for each component of light. For example, a first lens focuses component of light 56 into fiber 46 while a second lens focuses component of light 58 into fiber 48.

At least one lens 42 may be a conventional spherical lens, a GRIN lens, an aspherical lens, or any combination thereof. In some embodiments, at least one lens 42 may collimate or focus components of light 56,58 entering the at least one lens. At least one lens 42 may be placed in an optimal position in relation to beam splitter/combiner 34 and fibers 46, 48. The optimal position may be a position such that spillover or transmission loss of light is minimized between beam splitter/combiner 34, at least one lens 42, and fibers 46. 48.

In an embodiment using a single lens as at least one lens 42, a diverging angle between two components of light 56, 58 propagating through the lens may be called a lens diverging angle. The lens diverging angle may substantially match the diverging angle, $\gamma$, of beam splitter/combiner 34. Matching of the lens diverging angle with the beam splitter/combiner diverging angle may minimize losses associated with combining components of light into a beam of light or splitting the beam of light into components.

Fibers 46, 48 may be single mode fibers, multimode fibers, or PM fibers. The first and second components of light 56. 58 may propagate along the length of fibers 46, 48. In some embodiments, fibers 46, 48 may be coupled in a pigtail configuration to improve the strength and flexibility of the fibers. A component beam of light may exit or enter fiber 46 through end 47. Similarly, a component beam of light may exit or enter fiber 48 through end 49. Ends 47, 49 may include optically polished surfaces. The optically polished surfaces may be angled in an optical axis of the fiber. In certain embodiments, an AR coating is applied to ends 47, 49 of fibers 46, 48, respectively.

In certain embodiments, fibers 46. 48 may be PM fibers. In such a case, fiber 46 may have an optical axis that is about 90° aligned relative to the optical axis of fiber 48. In addition, the optical axis of fiber 46 may be aligned with the optical axis of wedge 50 or, in some embodiments; the optical axis of fiber 46 may be perpendicular to the optical axis of wedge 50.

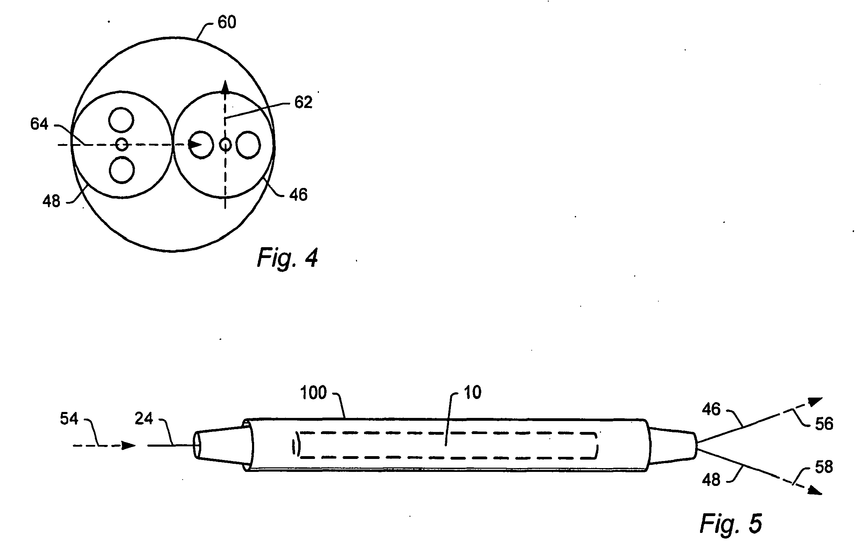

FIG. 4 depicts a cross-socdonal view of an embodiment of ferrule 60 containing PM fibers 46, 48. Fiber 46 may have optical axis 62 that is about 90° aligned relative to optical axis 64 of fiber 48. Ferrule 60 may be terminated in an angle. The terminated angle of ferrule 60 may substantially coincide with angled ends 47, 49 of fibers 46, 48. Ia certain embodiments, an end of ferrule 60 is polished.

In one arrangement beam splitter/combiner 34 is used to combine two components of light coming from second fiber coupling 40 into a combined beam of light. Components of light 56, 58 may enter the device through second fiber coupling 40 and be combined into a single beam of light 54 by beam splitter/combiner 34. In such a case, design parameters (e.g., diverging angle of beam splitter/combiner 34, lens positions, etc.) may be determined similarly as for the above embodiments that describe splitting a beam of light into two components of light. Optical beam splitting/combining device 10 may be used to operate as either a beam splitter or beam combiner depending on a desired use of the device. Reversing the operation of optical beam splitting/combining device 10 may only require altering the path of light through isolator.32 as described above.

FIG. 5 depicts a schematic of an embodiment of optical beam splitting/combining device 10 placed in housing 100. Optical beam splitting/combining device 10 may include first fiber coupling 20, core section 30, and second fiber coupling 40 as described in the embodiment of FIG. 1. In an embodiment, optical beam splitting/combining device 10 may split beam of light 54, which enters the device through fiber 24, into first component of light 56 and second component of light 58, which exit the device through fibers 46. 48. In another embodiment, optical beam splitting/combining device 10 may combine first component of light 56 and second component of light 58, which enter the device through fibers 46, 48, into beam of light 54, which exits the device through fiber 24. Optical beam splitting/combining device 10 may also inhibit beams from traveling in a reverse direction (optical feedback) with the use of isolator 32.

In some embodiments, optical beam splitting/combining device 10 may be used as a passive device. The passive device may be a portion of an optical network. For example, optical beam splitting/combining device 10 may be used in Raman amplifiers (such as dual-band Raman amplifiers), erbium-doped fiber amplifiers (EDFAs), dense wavelength division multiplexing (DWDM) systems, or optical add/drop multiplexers. Because optical beam splitting/combining device 10 includes an optical path free of contaminants (e.g., epoxy or other bonding materials), the optical beam splitting/combining device may be operable at relatively, high power densities (e.g., greater than about 500 milliwatts).

In an embodiment, optical beam splitting/combining device 10 may be used as a band splitter. For example, optical beam splitting/combining device 10 may be used as a C/L band splitter in an optical network. In another embodiment, optical beam splitting/combining device 10 may be used as a C/L band combiner in an optical network. Optical beam splitting/combining device 10 may provide excellent insertion loss behavior (i.e., low transmission losses), minimal polarization-dependent losses (PDL)(i.e., the difference in insertion loss for one polarization compared to another), and minimal polarization mode dispersion (PMD)(i.e., the difference in propagation speeds of different polarization planes).

Providing beam splitting/combining along with beam isolation in a single device may provide up to about 50% reduction in transmission losses as compared to using discrete splitting/combining devices and isolation devices. The increased transmission efficiency may also enable optical networks using optical beam splitting/combining device 10 to operate with lower power lasers, which tends to decrease costs (e.g., power coats or laser equipment costs) associated with installing and/or operating optical networks. Having the combined splitting/combining and isolation in a single device may also reduce the size of the optical device and/or reduce manufacturing costs of the device or optical network.

Optical beam splitting/combining device 10 may also have a relatively wide wavelength operating range (e.g., in the C and L bands). The relatively wide wavelength range of the optical beam splitting/combining device increases the usefulness of the device as the device may be used for a wide range of lasers. Since the optical beam splitting/combining device has the ability to be used for a wide range of lasers, the number of devices needed for a user's inventory tends to be reduced (e.g., one device may be used for multiple lasers rather than using several devices for multiple lasers).

It is to be understood that in any embodiment described herein, it may be possible to split multiple sets of beams of light and/or combine multiple sets of components of light using optical beam splitting/combining device 10. The multiple sets of beams of light and multiple sets of components of light may be multiplexed within optical beam splitting/combining device 10 such that the sets do not intersect or interfere with each other. It may also be necessary to modify optical beam splitting/combining device 10 such that the device can propagate multiple sets of beams or components. Por example, lenses, fibers may be modified and/or additional lenses or fibers may be used to operate the optical beam splitting/combining device with multiple sets of beams or components.

**Claims**

1. An optical device (10), comprising:

   a first fibre coupling (20) optically coupled to a fibre (24), wherein the fibre (24) is configured to propagate a beam of light (54);
   a beam splitter/combiner (34) optically coupled to the first fibre coupling (20);
   an isolator (32) optically coupled to the beam splitter/combiner (34); and,
   a second fibre coupling (40) optically coupled to the isolator (32) and optically coupled to a first additional fibre (46) and to a second additional fibre (48), wherein the first additional fibre (46) is configured to propagate a first component of light (56) and the second additional fibre (48) is configured to propagate a second component of light (58),
   wherein the beam splitter/combiner (34) is configured to split the beam of light (54) propagating from the first fibre coupling (20) into the first component of light (56) and the second component of light (58) or to combine the first component of light (56) and the second component of light (58) propagating from the second fibre coupling (40) into the beam of light (54),
   **characterised in that** the isolator (32) comprises a Faraday rotator (36) and is adapted for rotation by approximately 180° about a central axis wherein a direction of optical isolation of the isolator (32) between the first fibre coupling (20) and the second fibre coupling (40) is switchable, whereby the isolator (32) is configurable to inhibit optical feedback to a selected one of the first fibre coupling (20) and the second fibre coupling (40) according to whether the device (10) is to be configured for use as a beam splitter or a beam combiner, respectively.

2. An optical device (10), comprising:

   a first fibre coupling (20) optically coupled to a fibre (24), wherein the fibre (24) is configured to propagate a beam of light (54);
   a beam splitter/combiner (34) optically coupled to the first fibre coupling (20);
   an isolator (32) optically coupled to the beam splitter/combiner (34); and,
   a second fibre coupling (40) optically coupled to the isolator (32) and optically coupled to a first additional fibre (46) and to a second additional fibre (48), wherein the first additional fibre (46) is configured to propagate a first component of light (56) and the second additional fibre (48) is configured to propagate a second component of light (58),
   wherein the beam splitter/combiner (34) is configured to split the beam of light (54) propagating from the first fibre coupling (20) into the first component of light (56) and the second component of light (58) or to combine the first component of light (56) and the second component of light (58) propagating from the second fibre coupling (40) into the beam of light (54),
   **characterised in that** the isolator (32) comprises a Faraday rotator (36) and a direction of a magnetic field applied to the Faraday rotator (36) is switchable, wherein a direction of optical isolation of the isolator (32) between the first fibre coupling (20) and the second fibre coupling (40) is switchable, whereby the isolator (32) is configurable to inhibit optical feedback to a selected one of the first fibre coupling (20) and the second fibre coupling (40) according to whether the device (10) is to be configured for use as a beam splitter or a beam combiner, respectively.

3. The optical device (10) of any of claim 1 or claim 2, wherein the direction of optical isolation of the isolator (32) between the first fibre coupling (20) and the second fibre coupling (40) is mechanically switchable.

4. The optical device (10) of any of claim 1 or claim 2, wherein the direction of optical isolation of the isolator (32) between the first fibre coupling (20) and the second fibre coupling (40) is electrically switchable.

5. The optical device (10) of claim 1 or claim 2, wherein the isolator (32) is positioned between the beam splitter/combiner (34) and the second fibre coupling (40) and the isolator (32) is configurable to separately isolate the first (56) and second (58) components of light and thereby inhibit optical feedback to the selected one of the first fibre coupling (20) and the second fibre coupling (40).

6. The optical device (10) of claim 1 or claim 2, wherein the fibre (24) comprises an end (28) having an optically polished surface.

7. The optical device (10) of claim 6, wherein the optically polished surface is angled to an optical axis of the fibre (24).

8. The optical device (10) of claim 1 or claim 2, wherein the fibre (24) comprises an end (28) having an AR coating.

9. The optical device (10) of claim 1 or claim 2, wherein the first fibre coupling (20) comprises at least one lens (22), and wherein the at least one lens is configured to collimate the beam of light (54) propagating from the fibre (24) or focus the beam of light propagating to the fibre.

10. The optical device (10) of claim 1 or claim 2, wherein the beam splitter/combiner (34) comprises a polarised beam splitter/combiner.

11. The optical device (10) of claim 1 or claim 2, wherein the beam splitter/combiner (34) comprises a prism.

12. The optical device (10) of claim 1 or claim 2, wherein the beam splitter/combiner (34) comprises two optical wedges (50,52).

13. The optical device (10) of claim 12, wherein the optical axes of the two optical wedges (50,52) are rotated by 90° with respect to each other.

14. The optical device (10) of claim 1 or claim 2, wherein the isolator (32) is configured to provide about 30 dB optical isolation.

15. The optical device (10) of claim 1 or claim 2, wherein the second fibre coupling (40) is configured to focus the first (56) and second (58) components of light propagating into the first additional (46) and second additional (48) fibres, respectively, or to collimate the first and second components of light propagating from the first additional and second additional fibres, respectively.

16. The optical device (10) of claim 1 or claim 2, wherein the first and second additional fibres (46, 48) are polarization maintaining fibres and the first additional fibre (46) has an optical axis that is perpendicular to an optical axis of the second additional fibre (48).

17. A method for performing a selected one of splitting a beam of light and combining two components of light using a single optical device (10), the method comprising the steps of:

   propagating a beam of light (54) through a fibre (24);
   where beam splitting is performed, splitting the beam of light (54) into a first component of light (56) and a second component of light (58), and where beam combining is performed, combining the first component of light (56) and the second component of light (58) into the beam of light (54);
   inhibiting optical feedback with an optical isolator;
   propagating the first component of light (56) through a first additional fibre (46); and,
   propagating the second component (58) of light through a second additional fibre (48),
   **characterised in that** the optical isolator is a configurable isolator (32) comprising a Faraday rotator (36), and the method comprises the step of switching a direction of the optical isolation of the isolator (32) between the fibre (24) and the first (46) and second (48) additional fibres by rotating the isolator (32) about a central axis such that, where beam splitting is performed, optical feedback to the fibre (24) is inhibited and, where beam combining is performed, optical feedback to the first (46) and second (48) additional fibres is inhibited.

18. A method for performing a selected one of splitting a beam of light and combining two components of light using a single optical device (10), the method comprising the steps of:

   propagating a beam of light (54) through a fibre (24);
   where beam splitting is performed, splitting the beam of light (54) into a first component of light (56) and a second component of light (58), and where beam combining is performed, combining the first component of light (56) and the second component of light (58) into the beam of light (54);

inhibiting optical feedback with an optical isolator;

propagating the first component of light (56) through a first additional fibre (46); and,

propagating the second component (58) of light through a second additional fibre (48),

**characterised in that** the optical isolator is a configurable isolator (32) comprising a Faraday rotator (36), and the method comprises the step of switching a direction of the optical isolation of the isolator (32) between the fibre (24) and the first (46) and second (48) additional fibres by switching a direction of a magnetic field applied to the Faraday rotator (36) such that, where beam splitting is performed, optical feedback to the fibre (24) is inhibited and, where beam combining is performed, optical feedback to the first (46) and second (48) additional fibres is inhibited.

**19.** The method of claim 17 or claim 18, wherein the step of providing optical isolation comprises separately isolating the first (56) and second (56) components with the isolator (32) to prevent optical feedback to the fibre (24), where beam splitting is performed, or to the first (46) and second (48) additional fibres, where beam combining is performed.

**20.** The method of claim 17 or claim 18, further comprising polarising the first (56) and second (58) components of light such that the first component of light is polarised about 90° from the second component of light.

**Patentansprüche**

**1.** Optische Vorrichtung (10), umfassend:

eine erste Faserkupplung (20), optisch gekoppelt an eine Faser (24), wobei die Faser (24) konfiguriert ist, einen Lichtstrahl (54) fortzupflanzen;

einen Strahlenteiler/-Vereiniger (34), optisch gekoppelt an die erste Faserkupplung (20);

einen Isolator (32), optisch gekoppelt an den Strahlenteiler/-Vereiniger (34); und

eine zweite Faserkupplung (40), optisch gekoppelt an den Isolator (32) und optisch gekoppelt an eine erste zusätzliche Faser (46) und an eine zweite zusätzliche Faser (48), wobei die erste zusätzliche Faser (46) konfiguriert ist, eine erste Lichtkomponente (56) fortzupflanzen, und die zweite zusätzliche Faser (48) konfiguriert ist, eine zweite Lichtkomponente (58) fortzupflanzen,

wobei der Strahlenteiler/-Vereiniger (34) dazu konfiguriert ist, den sich von der ersten Faserkupplung (20) aus fortpflanzenden Lichtstrahl (54) in die erste Lichtkomponente (56) und die zweite Lichtkomponente (58) aufzuspalten oder die sich von der zweiten Faserkupplung (40) aus fortpflanzende erste Lichtkomponente (56) und die zweite Lichtkomponente (58) zu dem Lichtstrahl (54) zu vereinigen,

**dadurch gekennzeichnet, dass** der Isolator (32) einen Faraday-Rotator (36) umfasst und zur Rotation um annähernd 180° um eine mittige Achse herum angepasst ist, wobei die Richtung der optischen Isolation des Isolators (32) zwischen der ersten Faserkupplung (20) und der zweiten Faserkupplung (40) umschaltbar ist, wodurch der Isolator (32) dazu konfigurierbar ist, optische Rückkopplung zu jeweils einer ausgewählten aus der ersten Faserkupplung (20) und der zweiten Faserkupplung (40) je nachdem, ob die Vorrichtung (10) zur Verwendung als ein Strahlenteiler oder als ein Strahlenvereiniger konfiguriert werden soll, zu verhindern.

**2.** Optische Vorrichtung (10), umfassend:

eine erste Faserkupplung (20), optisch gekoppelt an eine Faser (24), wobei die Faser (24) konfiguriert ist, einen Lichtstrahl (54) fortzupflanzen;

einen Strahlenteiler/-Vereiniger (34), optisch gekoppelt an die erste Faserkupplung (20);

einen Isolator (32), optisch gekoppelt an den Strahlenteiler/-Vereiniger (34); und

eine zweite Faserkupplung (40), optisch gekoppelt an den Isolator (32) und optisch gekoppelt an eine erste zusätzliche Faser (46) und an eine zweite zusätzliche Faser (48), wobei die erste zusätzliche Faser (46) konfiguriert ist, eine erste Lichtkomponente (56) fortzupflanzen, und die zweite zusätzliche Faser (48) konfiguriert ist, eine zweite Lichtkomponente (58) fortzupflanzen,

wobei der Strahlenteiler/-Vereiniger (34) dazu konfiguriert ist, den sich von der ersten Faserkupplung (20) aus fortpflanzenden Lichtstrahl (54) in die erste Lichtkomponente (56) und die zweite Lichtkomponente (58) aufzuspalten oder die sich von der zweiten Faserkupplung (40) aus fortpflanzende erste Lichtkomponente (56) und die zweite Lichtkomponente (58) zu dem Lichtstrahl (54) zu vereinigen,

**dadurch gekennzeichnet, dass** der Isolator (32) einen Faraday-Rotator (36) umfasst und die Richtung eines an den Faraday-Rotator (36) angelegten magnetischen Feldes schaltbar ist, wobei die Richtung der optischen Isolation des Isolators (32) zwischen der ersten Faserkupplung (20) und der zweiten Faserkupplung (40) umschaltbar ist, wodurch der Isolator (32) dazu konfigurierbar ist, optische Rückkopplung zu jeweils einer ausgewählten aus der ersten Faserkupplung (20) und der zweiten Faserkupplung (40) je nachdem, ob die Vorrichtung (10) zur Verwendung als ein Strahlenteiler oder als ein Strahlenvereiniger konfiguriert werden soll, zu verhindern.

3. Optische Vorrichtung (10) gemäß irgendeinem aus Anspruch 1 oder Anspruch 2, wobei die Richtung der optischen Isolation des Isolators (32) zwischen der ersten Faserkupplung (20) und der zweiten Faserkupplung (40) auf mechanische Weise schaltbar ist.

4. Optische Vorrichtung (10) gemäß irgendeinem aus Anspruch 1 oder Anspruch 2, wobei die Richtung der optischen Isolation (32) des Isolators zwischen der ersten Faserkupplung (20) und der zweiten Faserkupplung (40) auf elektrische Weise schaltbar ist.

5. Optische Vorrichtung (10) gemäß Anspruch 1 oder Anspruch 2, wobei der Isolator (32) zwischen dem Strahlenteiler/-Vereiniger (34) und der zweiten Faserkupplung (40) positioniert ist, und der Isolator (32) dazu konfigurierbar ist, die erste (56) und die zweite (58) Lichtkomponente getrennt zu isolieren und **dadurch** optische Rückkopplung zu der jeweils ausgewählten aus der ersten Faserkupplung (20) und der zweiten Faserkupplung (40) zu verhindern.

6. Optische Vorrichtung (10) gemäß Anspruch 1 oder Anspruch 2, wobei die Faser (24) ein Ende (28) mit einer optisch polierten Oberfläche umfasst.

7. Optische Vorrichtung (10) gemäß Anspruch 6, wobei die optisch polierte Oberfläche abgewinkelt zu der optischen Achse der Faser (24) ist.

8. Optische Vorrichtung (10) gemäß Anspruch 1 oder Anspruch 2, wobei die Faser (24) ein Ende (28) mit einer Antireflex-Beschichtung umfasst.

9. Optische Vorrichtung (10) gemäß Anspruch 1 oder Anspruch 2, wobei die erste Faserkupplung mindestens eine Linse (22) umfasst, und wobei die mindestens eine Linse dazu konfiguriert ist, den sich aus der Faser (24) heraus fortpflanzenden Lichtstrahl (54) zu kollimieren oder den sich zu der Faser hin fortpflanzenden Lichtstrahl zu fokussieren.

10. Optische Vorrichtung (10) gemäß Anspruch 1 oder Anspruch 2, wobei der Strahlenteiler/-Vereiniger (34) einen polarisierten Strahlenteiler/-Vereiniger umfasst.

11. Optische Vorrichtung (10) gemäß Anspruch 1 oder Anspruch 2, wobei der Strahlenteiler/-Vereiniger (34) ein Prisma umfasst.

12. Optische Vorrichtung (10) gemäß Anspruch 1 oder Anspruch 2, wobei der Strahlenteiler/-Vereiniger (34) zwei Graukeile (50, 52) umfasst.

13. Optische Vorrichtung (10) gemäß Anspruch 12, wobei die optischen Achsen der beiden Graukeile (50, 52) um 90° gegeneinander verdreht sind.

14. Optische Vorrichtung (10) gemäß Anspruch 1 oder Anspruch 2, wobei der Isolator (32) dazu konfiguriert ist, etwa 30 dB optische Isolation bereitzustellen.

15. Optische Vorrichtung (10) gemäß Anspruch 1 oder Anspruch 2, wobei die zweite Faserkupplung (40) dazu konfiguriert ist, die ersten (56) und zweiten (58) Komponenten von Licht, die sich in die erste zusätzliche (46) beziehungsweise die zweite zusätzliche (48) Faser hinein fortpflanzen, zu fokussieren, oder die ersten und zweiten Komponenten von Licht, die sich aus der ersten zusätzlichen beziehungsweise der zweiten zusätzlichen Faser heraus fortpflanzen, zu kollimieren.

16. Optische Vorrichtung (10) gemäß Anspruch 1 oder Anspruch 2, wobei die erste und die zweite zusätzliche Faser (46, 48) die Polarisation beibehaltende Fasern sind, und die erste zusätzliche Faser (46) eine optische Achse hat, welche senkrecht zu der optischen Achse der zweiten zusätzlichen Faser (48) steht.

17. Verfahren zum Ausführen von wahlweise entweder Aufspalten eines Lichtstrahls oder Vereinigen zweier Lichtkomponenten unter Verwendung einer einzigen optischen Vorrichtung (10), wobei das Verfahren die Schritte umfasst von Fortpflanzen eines Lichtstrahls (54) durch eine Faser (24);

wo Strahlspaltung durchgeführt wird, Aufspalten des Lichtstrahls (54) in eine erste Lichtkomponente (56) und eine zweite Lichtkomponente (58), und wo Strahlenvereinigung durchgeführt wird, Vereinigen der ersten Lichtkomponente (56) und der zweiten Lichtkomponente (58) zu dem Lichtstrahl (54);

Verhindern von optischer Rückkopplung durch einen optischen Isolator;

Fortpflanzen der ersten Lichtkomponente (56) durch eine erste zusätzliche Faser (46) und

Fortpflanzen der zweiten Lichtkomponente (58) durch eine zweite zusätzliche Faser (48),

**dadurch gekennzeichnet, dass** der optische Isolator ein einen Faraday-Rotator (36) umfassender konfigurierbarer Isolator (32) ist, und das Verfahren umfasst den Schritt des Umschaltens der Richtung der optischen Isolation des Isolators (32) zwischen der Faser (24) und der ersten (46) und der zweiten (48) zusätzlichen Faser durch Drehen des Isolators (32) um eine mittige Achse derart, dass wo Strahlspaltung durchgeführt wird, optische Rückkopplung zu der Faser (24) verhindert wird, und wo Strahlenvereinigung durchgeführt wird, optische Rückkopplung zu der ersten (46) und der zweiten (48) zusätzlichen Faser verhindert wird.

18. Verfahren zum Ausführen von wahlweise entweder Aufspalten eines Lichtstrahls oder Vereinigen zweier Lichtkomponenten unter Verwendung einer einzigen optischen Vorrichtung (10), wobei das Verfahren die Schritte umfasst von Fortpflanzen eines Lichtstrahls (54) durch eine Faser (24);

wo Strahlspaltung durchgeführt wird, Aufspalten des Lichtstrahls (54) in eine erste Lichtkomponente (56) und eine zweite Lichtkomponente (58), und wo Strahlenvereinigung durchgeführt wird, Vereinigen der ersten Lichtkomponente (56) und der zweiten Lichtkomponente (58) zu dem Lichtstrahl (54);

Verhindern von optischer Rückkopplung durch einen optischen Isolator;

Fortpflanzen der ersten Lichtkomponente (56) durch eine erste zusätzliche Faser (46) und

Fortpflanzen der zweiten Lichtkomponente (58) durch eine zweite zusätzliche Faser (48),

**dadurch gekennzeichnet, dass** der optische Isolator ein einen Faraday-Rotator (36) umfassender konfigurierbarer Isolator (32) ist, und das Verfahren umfasst den Schritt des Umschaltens der Richtung der optischen Isolation des Isolators (32) zwischen der Faser (24) und der ersten (46) und der zweiten (48) zusätzlichen Faser durch Umschalten der Richtung eines an den Faraday-Rotator (36) angelegten magnetischen Feldes derart, dass wo Strahlspaltung durchgeführt wird, optische Rückkopplung zu der Faser (24) verhindert wird, und wo Strahlenvereinigung durchgeführt wird, optische Rückkopplung zu der ersten (46) und der zweiten (48) zusätzlichen Faser verhindert wird.

19. Verfahren gemäß Anspruch 17 oder Anspruch 18, wobei der Schritt des Bereitstellens von optischer Isolation das getrennte Isolieren der ersten (56) und zweiten (56) Komponenten mit dem Isolator (32) umfasst, um optische Rückkopplung zu der Faser (24) zu verhindern wenn Strahlspaltung durchgeführt wird, oder zu der ersten (46) und zweiten (48) zusätzlichen Faser, wenn Strahlenvereinigung durchgeführt wird.

20. Verfahren gemäß Anspruch 17 oder Anspruch 18, ferner umfassend das Polarisieren der ersten (56) und zweiten (58) Lichtkomponenten, so dass die erste Lichtkomponente um 90° gegen die zweite Lichtkomponente polarisiert ist.

## Revendications

1. Dispositif optique (10), comprenant :

un premier couplage de fibre (20), couplé optiquement à une fibre (24), où la fibre (24) est configurée pour propager un faisceau de lumière (54) ;
un diviseur/combineur de faisceau (34), couplé optiquement au premier couplage de fibre (20) ;
un isolateur (32) couplé optiquement au diviseur/combineur de faisceau (34), et
un deuxième couplage de fibre (40), couplé optiquement à l'isolateur (32) et couplé optiquement à une première fibre supplémentaire (46) et à une deuxième fibre supplémentaire (48), où la première fibre supplémentaire est configurée pour propager une première composante de lumière (56) et la deuxième fibre supplémentaire (48) est configurée pour propager une deuxième composante de lumière (58),
où le diviseur/combineur de faisceau (34) est configuré pour scinder le faisceau de lumière (54) se propageant depuis le premier couplage de fibre (20) en la première composante de lumière (56) et la deuxième composante de lumière (58) ou pour combiner la première composante de lumière (56) et la deuxième composante de lumière (58) se propageant depuis le deuxième couplage de fibre (40) en le faisceau de lumière (54),
**caractérisé en ce que** l'isolateur (32) comprend un rotateur de Faraday (36) et est adapté pour la rotation d'environ 180° autour d'un axe central, où une direction d'isolement optique de l'isolateur (32) entre le premier couplage de fibre (20) et le deuxième couplage de fibre (40) est commutable, où l'isolateur (32) peut être configuré pour empêcher la rétroaction optique vers l'un des premier couplage de fibre (20) et deuxième couplage de fibre (40) selon que le dispositif (10) doit être configuré pour être utilisé comme diviseur de faisceau ou combineur de faisceau, respectivement.

2. Dispositif optique (10), comprenant :

un premier couplage de fibre (20), couplé optiquement à une fibre (24), où la fibre (24) est configurée pour propager un faisceau de lumière (54) ;
un diviseur/combineur de faisceau (34), couplé optiquement au premier couplage de fibre (20) ;
un isolateur (32) couplé optiquement au diviseur/combineur de faisceau (34), et
un deuxième couplage de fibre (40), couplé optiquement à l'isolateur (32) et couplé optiquement à une première fibre supplémentaire (46) et à une deuxième fibre supplémentaire (48), où la première fibre supplémentaire est configurée pour propager une première composante de lumière (56) et la deuxième fibre supplémentaire (48) est configurée pour propager une deuxième composante de lumière (58),
où le diviseur/combineur de faisceau (34) est configuré pour scinder le faisceau de lumière (54) se propageant depuis le premier couplage de fibre (20) en la première composante de lumière (56) et la deuxième composante de lumière (58) ou pour combiner la première composante de lumière (56) et la deuxième composante de lumière (58) se propageant depuis le deuxième couplage de fibre (40) en le faisceau de lumière (54),
**caractérisé en ce que** l'isolateur (32) comprend un rotateur de Faraday (36) et une direction d'un champ magnétique appliqué au rotateur de Faraday (36) est commutable, où une direction d'isolement optique de l'isolateur (32) entre le premier couplage de fibre (20) et le deuxième couplage de fibre (40) est commutable, où l'isolateur (32) peut être configuré pour empêcher la rétroaction optique vers l'un des premier couplage de fibre (20) et deuxième couplage de fibre (40) selon que le dispositif (10) doit être configuré pour être utilisé comme diviseur de faisceau ou combineur de faisceau, respectivement.

3. Dispositif optique (10) selon l'une quelconque des revendications 1 et 2, où la direction de l'isolement optique de l'isolateur (32) entre le premier couplage de fibre (20) et le deuxième couplage de fibre (40) est commutable mécaniquement.

4. Dispositif optique (10) selon l'une quelconque des revendications 1 et 2, où la direction de l'isolement optique de l'isolateur (32) entre le premier couplage de fibre (20) et le deuxième couplage de fibre (40) est commutable électriquement.

5. Dispositif optique (10) selon l'une quelconque des revendications 1 et 2, où l'isolateur (32) est positionné entre le diviseur/combineur de faisceau (34) et le deuxième couplage de fibre (40) et l'isolateur (32) peut être configuré pour isoler séparément les première (56) et deuxième (58) composantes de lumière et ainsi, empêcher la rétroaction optique vers l'un des premier couplage de fibre (20) et deuxième couplage de fibre (40).

6. Dispositif optique (10) selon l'une quelconque des revendications 1 et 2, où la fibre (24) comprend une extrémité (28) ayant une surface optiquement polie.

7. Dispositif optique (10) selon la revendication 6, où la surface optiquement polie est en oblique par rapport à un axe optique de la fibre (24).

8. Dispositif optique (10) selon l'une quelconque des revendications 1 et 2, où la fibre (24) comprend une extrémité (28) ayant un revêtement AR.

9. Dispositif optique (10) selon l'une quelconque des revendications 1 et 2, où le premier couplage de fibre (20) comprend au moins une lentille (22), et où la au moins une lentille est configurée pour collimater le faisceau de lumière (54) se propageant depuis la fibre (24) ou pour focaliser le faisceau de lumière se propageant vers la fibre.

10. Dispositif optique (10) selon l'une quelconque des revendications 1 et 2, où le diviseur/combineur de faisceau (34) comprend un diviseur/combineur de faisceau polarisé.

11. Dispositif optique (10) selon l'une quelconque des revendications 1 et 2, où le diviseur/combineur de faisceau (34) comprend un prisme.

**12.** Dispositif optique (10) selon l'une quelconque des revendications 1 et 2, où le diviseur/combineur de faisceau (34) comprend deux coins optiques (50, 52).

**13.** Dispositif optique (10) selon la revendication 12, où les axes optiques des deux coins optiques (50, 52) sont à 90° l'un par rapport à l'autre.

**14.** Dispositif optique (10) selon l'une quelconque des revendications 1 et 2, où l'isolateur (32) est configuré pour procurer un isolement optique d'environ 30 dB.

**15.** Dispositif optique (10) selon l'une quelconque des revendications 1 et 2, où le deuxième couplage de fibre (40) est configuré pour focaliser les première (56) et deuxième (58) composantes de lumière se propageant dans la première fibre supplémentaire (46) et la deuxième fibre supplémentaire (48), respectivement, ou pour collimater les première et deuxième composantes de lumière se propageant depuis la première fibre supplémentaire et la deuxième fibre supplémentaire, respectivement.

**16.** Dispositif optique (10) selon l'une quelconque des revendications 1 et 2, où les première et deuxième fibres supplémentaires (46, 48) sont des fibres maintenant la polarisation et la première fibre supplémentaire (46) a un axe optique qui est perpendiculaire à un axe optique de la deuxième fibre supplémentaire (48).

**17.** Procédé pour réaliser l'un parmi la scission d'un faisceau de lumière et la combinaison de deux composantes de lumière en utilisant un seul dispositif optique (10), le procédé comprenant les étapes de :

propagation d'un faisceau de lumière (54) dans une fibre (24) ;
si la scission du faisceau est réalisée, la scission du faisceau de lumière (54) en une première composante de lumière (56) et une deuxième composante de lumière (58), et si la combinaison de faisceau est effectuée, la combinaison de la première composante de lumière (56) et de la deuxième composante de lumière (58) en le faisceau de lumière (54) ;
empêchement de la rétroaction optique avec un isolateur optique ;
propagation de la première composante de lumière (56) par une première fibre supplémentaire (46), et propagation de la deuxième composante de lumière (58) par une deuxième fibre supplémentaire (48),
**caractérisé en ce que** l'isolateur optique est un isolateur configurable (32) comprenant un rotateur de Faraday (36) et le procédé comprend l'étape de commutation d'une direction de l'isolement optique de l'isolateur (32) entre la fibre (24) et les première (46) et deuxième (48) fibres supplémentaires par rotation de l'isolateur (32) autour d'un axe central, de sorte que lorsque la scission du faisceau est réalisée, la rétroaction optique de la fibre (24) est inhibée et lorsque la combinaison est effectuée, la rétroaction optique des première (46) et deuxième (48) fibres supplémentaires est empêchée.

**18.** Procédé pour réaliser l'un parmi la scission d'un faisceau de lumière et la combinaison de deux composantes de lumière en utilisant un seul dispositif optique (10), le procédé comprenant les étapes de :

propagation d'un faisceau de lumière (54) dans une fibre (24) ;
si la scission du faisceau est réalisée, la scission du faisceau de lumière (54) en une première composante de lumière (56) et une deuxième composante de lumière (58), et si la combinaison de faisceau est effectuée, la combinaison de la première composante de lumière (56) et de la deuxième composante de lumière (58) en le faisceau de lumière (54) ;
empêchement de la rétroaction optique avec un isolateur optique ;
propagation de la première composante de lumière (56) par une première fibre supplémentaire (46), et propagation de la deuxième composante de lumière (58) par une deuxième fibre supplémentaire (48),
**caractérisé en ce que** l'isolateur optique est un isolateur configurable (32) comprenant un rotateur de Faraday (36) et le procédé comprend l'étape de commutation d'une direction de l'isolement optique de l'isolateur (32) entre la fibre (24) et les première (46) et deuxième (48) fibres supplémentaires en commutant une direction d'un champ magnétique appliqué sur le rotateur de faraday (36) de sorte que lorsque la scission du faisceau est réalisée, la rétroaction optique de la fibre (24) est inhibée et lorsque la combinaison est effectuée, la rétroaction optique des première (46) et deuxième (48) fibres supplémentaires est empêchée.

**19.** Procédé selon la revendication 17 ou 18, dans lequel l'étape de réalisation de l'isolement optique comprend l'isolement séparément des première (56) et deuxième (58) composantes avec l'isolateur (32) pour prévenir la rétroaction optique vers la fibre (24) si le scission du faisceau est réalisée, ou vers les première (46) et deuxième (48) fibres supplémentaires si la combinaison de faisceau est effectuée.

**20.** Procédé selon la revendication 17 ou 18, comprenant en outre, la polarisation des première (56) et deuxième (58) composantes de lumière de sorte que la première composante de lumière est polarisée à environ 90° par rapport à la deuxième composante de lumière.

Fig. 1

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5657155 A

- US 5642448 A